# FASCICULE DE BREVET EUROPEEN

(11) **EP 1 009 697 B1**
(45) Date de publication et mention de la délivrance du brevet: **30.10.2002**
(21) Numéro de dépôt: 98910792.5
(22) Date de dépôt: 13.02.1998
(51) Int. Cl.: B65G 65/46

(54) **DISPOSITIF DE PRELEVEMENT EN QUANTITES DOSEES DE PRODUITS DIVISES ET INSTALLATION COMPORTANT DE TELS DISPOSITIFS**
VORRICHTUNG ZUR PORTIONENWEISEN DOSIERUNG VON TEILCHEN-MATERIAL UND ANLAGE MIT EINER SOLCHEN VORRICHTUNG
DEVICE FOR SAMPLING POWDERY PRODUCTS IN MEASURED AMOUNTS AND INSTALLATION COMPRISING SAME

(30) Priorité: 13.02.1997 FR 9701796
(43) Date de publication de la demande: 21.06.2000
(73) Titulaire: Roxane S.A., 34000 Montpellier (FR)
(72) Inventeur: SOLIGNAC, Jean-Pierre, F-34270 Saint Mathieu de Tréviers (FR)
(74) Mandataire: Ravina, Bernard
(86) Numéro de dépôt international: FR9800329
(87) Numéro de publication internationale: WO98035896

(56) Documents cités:
- EP-A- 0 275 236
- FR-A- 1 431 785
- FR-A- 2 312 437
- FR-A- 2 626 667
- US-A- 2 858 011
- US-A- 4 077 527
- PATENT ABSTRACTS OF JAPAN vol. 8, no. 54 (M-282) [1491] , 10 mars 1984 & JP 58 207223 A (KUBOTA TEKKO), 2 décembre 1983,

## Description

Il est précisé que par produits divisés il faut entendre tous genre de produits divisés en particules, en grains, en cristaux, et autres, de granulométrie faible ou importante. Dans le présent document, le terme " pulvérulent "qualifie ce genre de produit.

La présente invention concerne un dispositif permettant le prélevement automatisé de quantités précises de produits solides pulvérulents aux caractéristiques physiques très diverses.

Le prélèvement d'une poudre en quantité précise nécessite de l'extraire d'un récipient de stockage, de la transporter jusqu'à un point de déversement, de la déverser, généralement, dans un récipient placé sur une balance de précision, et d'arrêter l'écoulement lorsque la quantité désirée est atteinte. Suivant les caractéristiques physiques de la poudre à prélever, la difficulté de l'opération réside surtout dans l'extraction et le transport ou dans l'atteinte de la précision du dosage en fin d'opération.

On connaît, par FR-A-2 723 350 délivré à la demanderesse, un dispositif de prélèvement de poudre qui met en oeuvre, à la base d'un réservoir dans lequel la poudre à doser est brassée par des agitateurs, un tube horizontal communiquant avec ledit réservoir, percé inférieurement à l'une de ses extrémités d'une ouverture et dans lequel est placé un transporteur entraîné en rotation constitué par une tige portant une hélice constituée par un ressort hélicoïdal. Ce transporteur agit comme une vis d'Archimede, et son comportement en cas de bourrage favorise le décolmatage du tube horizontal.

On connaît également, par FR-A-2 737 466 au nom de la demanderesse, un dispositif additionnel caractérisé essentiellement par la présence, au niveau de l'ouverture de délivrance que comporte le tube horizontal tel que décrit ci-dessus, d'un disque mobile en déplacement longitudinal obturant transversalement ledit tube, en aval et en bordure de l'ouverture de sortie de la poudre à doser. Dans la configuration décrite dans ce brevet, la tige du transporteur s'étend en aval de l'ouverture et vient s'engager dans un palier solidaire de la structure du dispositif. Toujours selon cette configuration le disque comporte un perçage traversant central par lequel il est monté avec possibilité de coulissement sur la partie aval de la tige. Le disque, dont le bord comporte un chanfrein en regard du moyen d'amené, est sollicité vers l'ouverture pour l'obturer totalement par un ressort monté autour de la partie aval de la tige. Ce disque, sous la poussée de la poudre transportée dans le tube est susceptible de se déplacer sur la partie aval de la vis, à l'encontre de l'action exercée par le ressort. Ainsi sous l'effet de la poussée, l'orifice est plus ou moins degagé et de la poudre peut s'extraire du tube. Ce dispositif permet de réaliser de très petits prélèvements, le disque n'autorisant, quand le débit de poudre est faible, que l'écoulement des grains les plus fins. Un mode particulier de réalisation de ce dernier dispositif permet le brassage de la poudre dans le réservoir au moyen d'un ressort hélicoïdal mis en rotation au-dessus de la vis ou du ressort d'amenée:

Tous ces dispositifs présentent toutefois quelques inconvénients:
- l'extraction des poudres du réservoir de stockage est quelquefois difficile, en fonction de leurs caractéristiques physiques: le dispositif de brassage peut se révéler insuffisant dans certains cas.
- le dimensionnement du ressort lié au disque d'obturation est difficile: ainsi, en fonction des caractéristiques physiques de la poudre, celui-ci peut, soit limiter le débit, soit fermer de façon incomplète le tube,

La présente invention a pour but de remédier a ces inconvénients.

A cet effet le dispositif de prélèvement de produits pulvérulents en quantités dosées comprenant un réservoir de stockage de la poudre à délivrer en quantités dosées, un conduit tubulaire pénétrant dans le réservoir en partie inférieure de ce dernier, ledit conduit tubulaire recevant à l'intérieur un élément de prélèvement du produit pulvérulent dans le réservoir et de transport de ce dernier depuis un orifice de chargement que présente le conduit dans le réservoir vers un orifice de délivrance du produit pulvérulent que présente le conduit à l'extérieur du réservoir, ledit orifice de délivrance étant associé à un élément d'obturation caractérisé en ce que ledit élément d'obturation peut à la commande être positionné et maintenu soit selon une position de dégagement total dudit orifice, soit selon une position d'occlusion dudit orifice selon laquelle un intervalle annulaire subsiste entre le contour dudit orifice et le contour dudit élément d'obturation, la largeur de l'intervalle annulaire étant du même ordre d'importance que la grosseur de chaque grain du produit pulvérulent.

On conçoit que la position de dégagement total permet un débit maximum de produit pulvérulent au travers de l'orifice de délivrance. En revanche, la position d'occlusion conduit à un débit très faible permettant une grande précision dans la quantité délivrée de produit pulvérulent. La faible largeur de l'intervalle annulaire entre l'orifice de délivrance et l'élément d'occlusion engendre une perte de charge importante et ralentit grandement l'écoulement du produit qui se trouve comprimé en arrière et contre l'élément obturation sous l'effet des forces de poussée résultant du mouvement de l'élément de transport. Ces forces de poussée ont pour effet de forcer le passage d'une faible quantité de produit au travers de l'intervalle annulaire. Les grains d'une grosseur légèrement supérieure à la largeur de l'intervalle soit ne passeront pas ou soit seront cisaillés et divisés lors de leur passage. Avec de telles caractéristiques, l'expérience démontre qu'il est possible d'obtenir une précision dans le dosage de l'ordre du milligramme, ce qui autorise l'emploi de ce dispositif pour le dosage automatique et répétitif de compositions pharmaceutiques et autres compositions exigeant des degrés élevés de précision.

Selon une autre caractéristique de l'invention, l'élément de prélèvement et de transport est constitué par une tige disposée selon l'axe central longitudinal du conduit et par au moins un organe de poussée fixé à la tige et formant plusieurs spires successives autour de la tige, ledit élément de prélèvement et de transport, par sa tige, étant monté mobile en rotation sur deux paliers d'extrémité solidaires du conduit dont un est externe au réservoir et l'autre interne, ledit élément de prélèvement, étant par sa tige à la commande, entraîné en rotation par un organe moteur autour de l'axe géométrique central longitudinal de la tige.

Cette disposition présente l'avantage de la simplicité et permet en contrôlant et en ajustant la vitesse de rotation de l'élément de prélèvement d'ajuster la valeur du débit du produit délivré. Par ailleurs il est possible en entraînant en rotation l'élément en sens inverse de ramener le produit pulvérulent contenu dans le conduit, dans le réservoir et éventuellement éviter tout écoulement parasite de produit.

Selon une autre caractéristique de l'invention, l'élément d'obturation est normal à l'axe géométrique de rotation de la tige et est déplaçable en translation le long de ce dernier entre la position de dégagement total et la position d'occlusion.

Selon un autre aspect de l'invention, l'élément d'obturation est fixé en translation à la tige et ladite tige est montée de manière mobile en translation selon l'axe géométrique de rotation dans les paliers de guidage en translation.

Selon une autre caractéristique de l'invention, la tige de l'élément de prélèvement, au niveau de son palier externe au réservoir, est prolongée au-delà de ce dernier pour recevoir un élément d'accouplement à un ensemble moteur d'entraînement en rotation et en translation.

L'avantage de telles caractéristiques techniques réside essentiellement dans le fait qu'il est utilisé un seul et même ensemble moteur pour actionner la tige en rotation et en translation.

Selon une autre caractéristique de l'invention, le dispositif de prélèvement de produits pulvérulents est doté, dans le réservoir, d'un dispositif de brassage et d'émottage du produit pulvérulent.

Cette disposition évite l'agglomération du produit dans le réservoir et assure, par voie de conséquence, l'alimentation régulière en produit pulvérulent de l'élément de prélèvement et de transport.

La présente invention à également pour objet une installation de dosage automatique de produits pulvérulents caractérisée essentiellement ce qu'elle comporte au moins un dispositif selon l'invention.

Selon une autre caractéristique, l'installation comporte plusieurs dispositifs agencés selon au moins une rangée rectiligne ou circulaire face à laquelle est déplacé un équipage mobile motorisé portant l'ensemble moteur d'actionnement en rotation et en translation de la tige de l'élément de prélèvement et de transport, ainsi qu'une balance de pesée et un récipient de réception de produit pulvérulent installé sur la balance de pesée.

Selon encore une autre caractéristique, l'ensemble moteur est constitué par un moteur électrique sur l'arbre de sortie rotatif duquel est fixée tant en translation qu'en rotation, une roue dentée destinée à être engrenée avec l'élément d'accouplement constitué par un pignon denté.

Selon encore une autre caractéristique, l'ensemble moteur est pourvu d'une platine horizontale montée en coulissement sur des glissières, normales ou radiales à la rangée de dispositifs, et d'un second moteur pour déplacer la platine le long de ses glissières et amener la roue dentée au-dessus du pignon ou bien la dégager de ce dernier.

Selon une autre caractéristique, la roue dentée se développe sous la forme d'un secteur circulaire et présente un dégagement rectiligne par lequel elle est positionnée au dessus du pignon par déplacement de la platine avant d'être engrenée au pignon et ladite roue de part et d'autre de sa zone dentée est dotée de deux flancs latéraux sous forme de secteur circulaire, lesquels, par rotation de la roue viennent se disposer de part et d'autre du pignon denté.

Enfin selon une autre caractéristique l'équipage mobile porte une mâchoire inférieure mobilisée selon un mouvement ascendant d'engagement et un mouvement descendant de dégagement par un vérin. La mâchoire inférieure est terminée par une forme de fourche qui vient en fin de course de mouvement ascendant se positionner en arrière du pignon denté autour de la tige. Les glissières de la platine sont montées sur un support approprié monté sur des glissières verticales et mobilisé en translation verticale par un organe moteur.

D'autres avantages et caractéristiques de l'invention apparaîtront à la lecture de la description d'une forme préférée de réalisation, donnée à titre d'exemple non limitatif, en se référant aux dessins annexés en lesquels :
- la figure 1 est une vue en coupe longitudinale d'un dispositif selon une première forme de réalisation,
- la figure 2 est une vue de dessus du dispositif selon la figure 1.
- la figure 3 est une vue de face du dispositif de la figure 1.
- la figure 4 est une vue en coupe longitudinale d'un dispositif selon une seconde forme de réalisation,

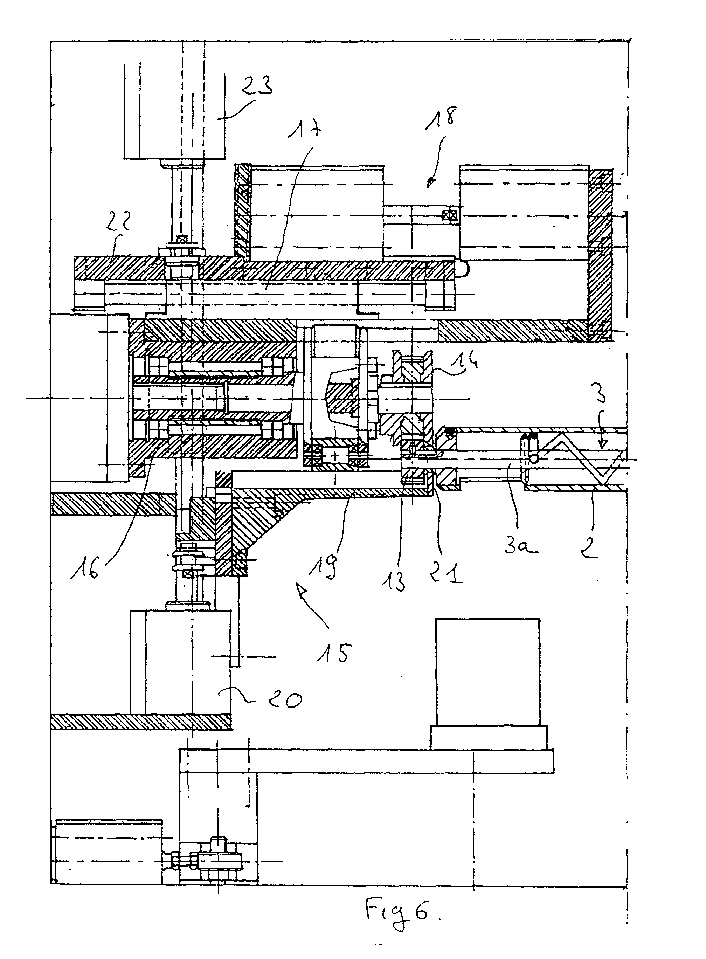

- la figure 5 est une vue de détail montrant l'élément d'obturation en position de dégagement total,
- la figure 6 est une vue en coupe d'un ensemble moteur d'entraînement, selon une forme préférée de réalisation.

Tel que représenté, le dispositif, selon l'invention, comprend un réservoir de stockage 1 du produit pulvérulent à délivrer en quantité dosée, un conduit tubulaire 2 rectiligne, horizontal, pénétrant dans le réservoir et y occupant par la partie interne au réservoir, sensiblement la majeure partie de la longueur de ce dernier.

Le conduit tubulaire 2, présente une section interne cylindrique et reçoit dans cette section un élément 3 de prélèvement du produit pulvérulent contenu dans le réservoir et de transport de ce produit depuis un orifice de chargement 4 que présente le conduit 2 dans le réservoir 1 vers un orifice de délivrance 5 du produit pulvérulent, formé dans le conduit 2 à l'extérieur du réservoir 1.

Selon la forme préférée de réalisation l'orifice de chargement est formé par une lumière pratiquée dans la paroi du conduit tubulaire 2 et tournée vers le haut du réservoir 1, de façon à permettre l'écoulement gravitaire du produit pulvérulent depuis le réservoir 1 vers le conduit 2 et donc vers l'élément de prélèvement et de transport 3. De préférence la lumière est formée sur la majeure partie de la longueur, de la portion interne au réservoir, du conduit tubulaire 2.

Toujours selon cette forme préférée de réalisation, l'orifice de délivrance 5 est formé dans le conduit 2 immédiatement en amont d'une ouverture d'évacuation 6 que comporte le conduit et formée dans la paroi cylindrique de ce dernier. Cette ouverture d'évacuation est orientée vers le bas de façon que le produit pulvérulent puisse s'ecouler, sous l'effet de la gravité, depuis l'orifice de délivrance 5 vers un récipient placé sous l'ouverture d'évacuation 6, par exemple sur un dispositif de pesée non représenté.

Selon la forme préférée de réalisation, l'élément de prélèvement et de transport 3 est constitué par une tige 3a disposée selon l'axe central longitudinal du conduit 2 et par au moins un organe de poussée 3b fixé à la tige 3a et formant plusieurs spires successives autour de la tige, ledit élément de prélèvement et de transport 3 par sa tige 3a étant monté mobile en rotation sur deux paliers d'extrémité solidaires du conduit dont un est externe au réservoir et l'autre interne, ledit élément de prélèvement 3, étant par sa tige, à la commande, entraîné en rotation par un ensemble moteur autour de l'axe géométrique central longitudinal de la tige 3a.

Les paliers de guidage de la tige 3a sont montés respectivement aux deux extrémités du conduit tubulaire 2. Ainsi, le palier externe au réservoir de guidage de la tige 3a de l'élément de prélèvement est monté dans le conduit en avant de !a lumière 6 d'évacuation, tandis que le palier interne au réservoir de guidage de la tige est monté en arrière de l'orifice de chargement 4.

Conformément à l'invention, le dispositif de prélèvement est doté d'un élément d'obturation 7 associé à l'orifice de délivrance 5. Cet élément d'obturation 7 peut, à la commande, être positionné et maintenu soit selon une position de dégagement total de l'orifice 5 et se trouver dans cette position en aval dudit orifice 5 et de la lumière d'évacuation 6, soit selon une position d'occlusion dudit orifice 5 selon laquelle un intervalle annulaire subsiste entre ledit orifice 5 et le contour dudit élément d'obturation 7. La largeur de cet intervalle annulaire est adaptée à la grosseur des grains du produit pulvérulent.

En position de dégagement total de l'élément d'obturation 7. rien ne s'oppose à la sortie du produit pulvérulent par l'orifice 5 et l'ouverture 6.

En fonction de la forme de l'élément de prélèvement et de transport 3, des caractéristiques du produit pulvérulent et de la vitesse de rotation de l'élément 3, le débit obtenu peut être très important. La mise en position d'occlusion après une phase de gros débit, permet de stopper nettement le prélèvement, et évite des chutes non maîtrisées de produit pulvérulent pendant la phase finale assurant la précision du prélèvement.

En position d'occlusion, l'élément d'obturation 7 se trouve dans l'orifice 5. En fonction de la forme de cet élément d'obturation 7, des caractéristiques du produit pulvérulent et de la vitesse de rotation de l'élément 3 ne vont passer que de très petites quantités de produit. Ainsi est obtenu un débit très faible permettant d'atteindre la précision requise.

Selon la forme préférée de réalisation, l'élément d'obturation 7 est normal à l'axe géométrique de rotation de la tige 3a et est déplaçable en translation le long de ce dernier entre la position de dégagement total et la position d'occlusion.

De préférence, cet élément d'obturation 7, sous forme de disque circulaire, est monté sur la tige 3a de l'élément 3 et est fixé en translation et rotation à cette dernière. A cet effet, ce disque 7 est pourvu d'un perçage traversant central pour être engagé sur la tige 3a et est équipé d'un taraudage radial débouchant dans le perçage central pour recevoir une vis de fixation à la tige 3a. On conçoit donc que l'élément d'obturation 7 est entraîné en rotation avec l'élément de prélèvement et de transport 3. Ainsi, en position d'occlusion, la rotation de l'élément d'obturation 7 va faciliter le cisaillement et donc la division des grains de taille légèrement supérieure à la largeur de l'intervalle annulaire formé entre l'orifice 5 et l'élément d'obturation 7. Pour renforcer cette caractéristique. l'élément d'obturation 7 comporte, selon son périmètre, un rebord formant une arête vive continue.

Le disque que forme l'élément d'obturation 7, pourra comporter une série d'encoches régulièrement espacées et une série de dents régulièrement espacées, chaque dent étant disposée entre deux encoches consécutives.

La taille de chaque encoche est adaptée à la granulométrie du produit pulvérulent. Les dents formées contribuent également au cisaillement et à la division des grains de taille plus importante.

Le dispositif de prélèvement 3 est équipé, dans le réservoir 1, d'un dispositif de brassage et d'émottage du produit pulvérulent. De ce brassage et émottage, il en résulte une aération du produit conduisant à une fluidisation de ce dernier, ce qui va faciliter son transport dans le conduit 2 vers l'orifice 5.

Selon une première forme de réalisation, le dispositif de brassage et d'émottage est solidaire de l'élément de prélèvement et de transport.

Ainsi, lors de la rotation de l'élément 3, le produit pulvérulent se trouve brassé et décompacté.

Dans la forme préférée dé réalisation, la tige 3a de l'élément de prélèvement et de transport, est prolongée au-delà de son palier interne au réservoir et le dispositif de brassage et d'émottage est fixé à l'extrémité de la tige interne au réservoir.

Ce dispositif de brassage et d'émottage est coaxial à l'élément 3 de prélèvement et de transport et entoure la partie interne au réservoir dudit élément 3. De cette façon, le dispositif de brassage et d'émottage est entraîné en rotation dans le réservoir par l'élément 3.

Au cours de cette rotation, le produit pulvérulent est entraîné vers le haut du réservoir et est amené à retomber sur l'élément de prélèvement et de transport 3.

Le dispositif de brassage et d'émottage est constitué par un profilé 8 enroulé en spirale autour de la partie interne au réservoir du conduit 2. Par une de ses extrémités, ce profilé est fixé à la tige 3a.

A ce dispositif tel que décrit, peut être adjoint un disque coupant 9 monté en rotation sur la partie interne au réservoir 1 du conduit tubulaire 2 et fixé à l'autre extrémité du dispositif de brassage et d'émottage 8. Ce disque coupant facilite la rupture des mottes les plus importantes susceptibles de s'être formées dans le réservoir et contribue à une réduction de la granulométrie.

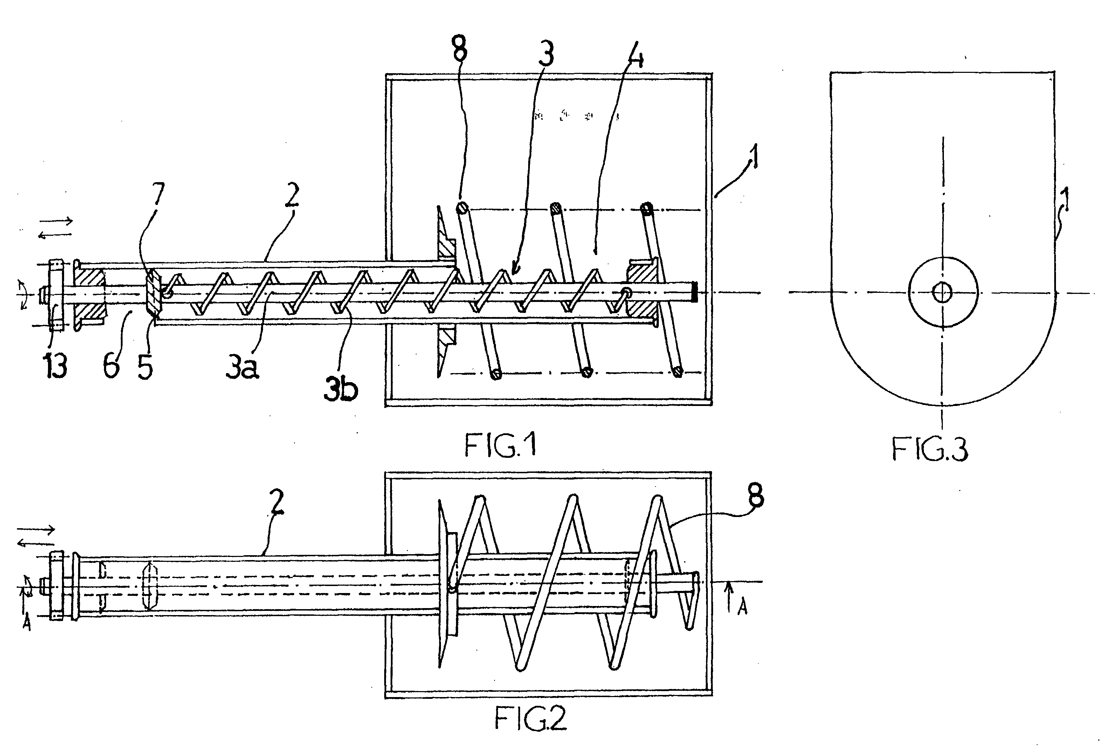

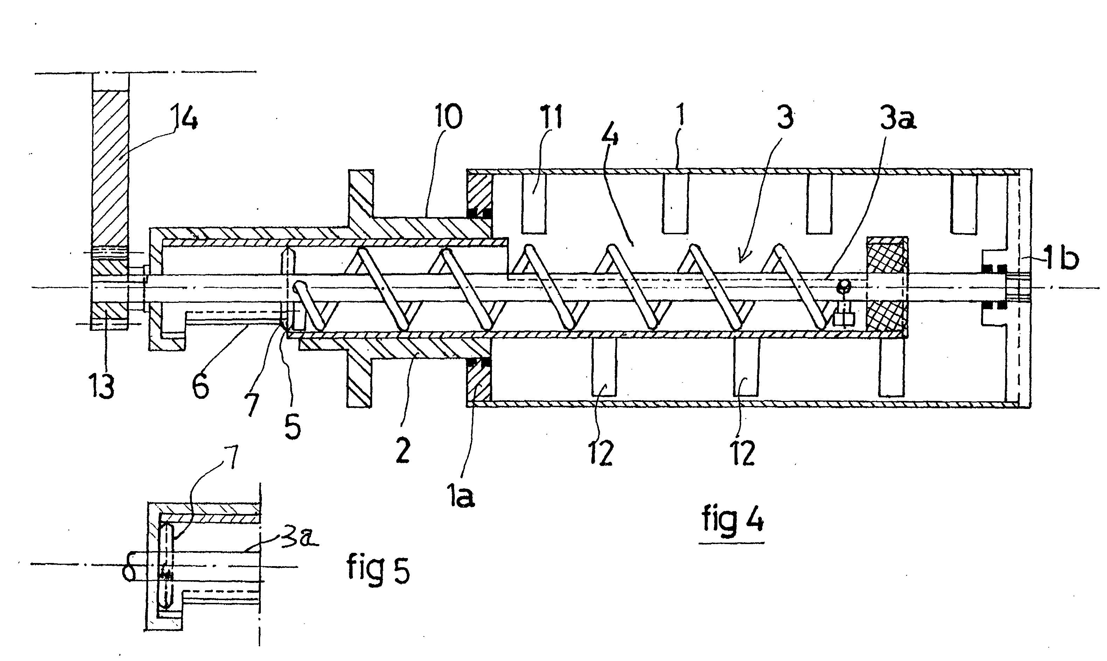

Dans la forme de réalisation, objet des figures 1 à 3, le réservoir est fixe tandis que dans la forme de réalisation, objet de la figure 4, le réservoir est mobile et est entraîné en rotation par un ensemble moteur autour de l'axe géométrique longitudinal de la tige 3a du dispositif de prélèvement et de transport.

De préférence, sans que cela soit limitatif, le réservoir fixe 1 présente un fond sous forme de goulotte semi-cylindrique. Selon l'axe géométrique de révolution de cette goulotte sont installées, la partie interne au réservoir du conduit 2 et la partie interne au réservoir de l'élément de prélèvement et de transport 3.

Un réservoir 1 mobile en rotation sera, de préférence, de forme cylindrique, la partie interne au réservoir du conduit 2 et du dispositif de prélèvement et de transport 3 étant installée selon l'axe longitudinal central du réservoir. Ce réservoir est donc formé d'une enveloppe cylindrique à laquelle sont fixées deux parois latérales opposées 1a, 1b

Ce réservoir 1, comme on peut le voir en figure 4, est monté en rotation autour du conduit 2, la paroi latérale correspondante 1a du réservoir 1 étant traversée de part en part d'un alésage de guidage par lequel le réservoir est monté en rotation sur une portée lisse cylindrique 10 du conduit 2. Selon cette disposition, l'extrémité interne au réservoir de la tige 3a du dispositif de prélèvement et de transport 3 est calée en rotation sur l'autre paroi latérale 1b du réservoir 1 de façon à transmettre au réservoir 1 son mouvement de rotation. De préférence, la tige 3a est également calée en translation sur le réservoir et transmet donc à ce dernier le mouvement de translation dont elle est animée lors du changement de position de l'élément d'obturation 7.

Pour un réservoir mobile en rotation, le dispositif de brassage et d'émottage est constitué par une première série de pales 11 fixée à la paroi du réservoir 1 et s'étendant de manière radiale vers l'axe de rotation de ce dernier et par une seconde série de pales 12 fixées au conduit tubulaire 2 et s'étendant de manière radiale par rapport à ce dernier vers la paroi du réservoir, les pales de la première série et les pales de la seconde série étant décalées longitudinalement par rapport à l'axe de rotation du réservoir de façon à s'interpénétrer au cours de la rotation et cisailler la masse de produit pulvérulent.

Comme dit précédemment, à la tige 3a de l'élément 3 est associé un organe d'accouplement 13 constitué par un pignon denté 13 avec lequel s'engrène à la commande, une roue dentée 14 entraînée en rotation par un ensemble moteur décrit plus loin.

Cet ensemble moteur peut être solidaire du dispositif tel que décrit ou bien être porté par un équipage mobile 15 motorisé déplaçable le long d'une ou plusieurs rangée(s), agencée(s) en cercle ou ligne droite, de dispositifs selon l'invention et positionnable tour à tour face à certains d'entre eux pour prélever de leurs réservoirs la quantité de poudre requise et la déverser dans un récipient porté par une balance de pesée installée sur l'équipage mobile et connectée électriquement à un ensemble de pilotage et de contrôle du type micro-ordinateur. Ce micro-ordinateur possède un programme informatique qui commande et contrôle en fonction des instructions et données du programme, le déplacement de l'équipage mobile 15, son positionnement face à l'un des dispositifs et l'opération de dosage correspondante.

Ainsi, le programme détermine, au fur et à mesure de l'exécution du dosage demandé, les commandes de rotation avant ou arrière ainsi que de positionnement axial, en fonction du calibrage établi au préalable pour chaque type de poudre, ainsi que des informations transmises en retour par la balance enregistrant la pesée des quantites délivrées.

Un tel agencement de moyens forme une installation de dosage automatique de produits pulvérulents.

L'ensemble moteur pourra être constitué par un moteur électrique 16 sur l'arbre de sortie rotatif duquel est fixée tant en translation qu'en rotation, la roue dentée 14. Cet ensemble moteur sera pourvu d'une platine horizontale 17 montée en coulissement sur des glissières, par exemple horizontales, normales ou radiales à la rangée de dispositifs, et d'un second moteur 18, du type vérin pneumatique par exemple, pour déplacer la platine le long de ses glissières et amener la roue dentée 14 au-dessus du pignon 13 ou bien la dégager de ce dernier. Dans la forme préférée de réalisation, la roue 13 se développe sous la forme d'un secteur circulaire et présente de ce fait un dégagement de préférence rectiligne. Ainsi la roue 14, par déplacement de la platine le long des glissières, est amenée par son dégagement au-dessus du pignon 13. Par rotation, cette roue est amenée en prise avec le pignon denté 13 et lui transmet son mouvement de rotation. En outre la roue dentée 14 de part et d'autre de sa zone dentée est dotée de deux flancs latéraux sous forme de secteur circulaire. Au cours de la rotation, ces flancs latéraux viennent se disposer de part et d'autre du pignon 13 et permettre donc le calage en translation sur ledit pignon 13. Ainsi, par déplacement de la platine selon l'axe de rotation de la tige 3a, il est possible de positionner l'élément d'obturation 7 en position de dégagement total ou bien en position d'occlusion.

L'équipage mobile 15 pourra porter une mâchoire inférieure 19 mobilisée selon un mouvement ascendant d'engagement et un mouvement descendant de dégagement par un vérin pneumatique 20 ou autre. Cette mâchoire 19 sera terminée par une forme de fourche 21 viendra en fin de course de mouvement ascendant se positionner en arrière du pignon denté 13 autour de la tige 3a. Les glissières de la platine sont montées sur un support 22 approprié monté sur des glissières verticales et mobilisé en translation verticale par un organe moteur 23 du type vérin pneumatique par exemple. Selon cette forme de réalisation, la roue 14 ne se développe plus sous la forme d'un secteur circulaire mais sous la forme d'un cercle complet. Cette roue comporte toujours deux flancs latéraux. Pour l'engrènement de la roue 14 avec le pignon 13, le support 22 est d'abord élevé et la platine déplacée vers le dispositif de prélèvement pour placer la roue 14 au-dessus du pignon 13. Ensuite le support est abaissé pour que la roue 14 s'engrène avec le pignon 13.

Le dispositif objet de la présente invention peut être utilisé en fonction de sa taille, pour des applications industrielles ou pour des applications de laboratoire, dans tous les secteurs d'activité réalisant des compositions de produits très divers. De même le dispositif selon l'invention peut être utilisé dans une installation de dosage comportant des dispositifs de dosage de produits liquides, tel qu'il est décrit dans le brevet d'invention français n° 91/06705 délivré à la demanderesse ainsi que dans les demandes de brevet FR 97/06436, FR 96/11004 et internationales PCT/FR97/01582 au nom de la demanderesse.

## Revendications

1. Dispositif de préièvement de produits pulvérulents en quantités dosées, comprenant un réservoir (1)de stockage du produit pulvérulent à délivrer en quantités dosées, un conduit tubulaire (2) pénétrant dans le réservoir (1), ledit conduit tubulaire (2) recevant à l'intérieur un élément (3) de prélèvement du produit pulvérulent dans le réservoir (1) et de transport de ce dernier depuis un orifice de chargement (4) que présente le conduit (21) dans le réservoir vers un orifice de délivrance (5) du produit pulvérulent que présente le conduit (2) à l'extérieur du réservoir (1), ledit orifice de délivrance (5) étant associé à un élément d'obturation (7), **caractérisé en ce que** ledit élément d'obturation peut à la commande être positionné et maintenu soit selon une position de dégagement total dudit orifice, soit selon une position d'occlusion dudit orifice selon laquelle un intervalle annulaire subsiste entre ledit orifice (5) et le contour dudit élément d'obturation (7), la largeur de l'intervalle annulaire étant du même ordre d'importance que la grosseur des grains composant le produit pulvérulent, la position de dégagement total permettant un débit maximum de produit pulvérulent et la position d'occlusion un débit très faible permettant une grande précision dans la quantité délivrée de produit pulvérulent.

2. Dispositif de prélèvement de produits pulvérulents selon la revendication 1, **caractérisé en ce que** l'élément de préièvement et de transport est constitué par une tige (3a) disposée selon l'axe central longitudinal du conduit (2) et par au moins un organe de poussée (3b) fixé à la tige (3a) et formant plusieurs spires successives autour de la tige, ledit élément de prélèvement et de transport (3) par sa tige (3a) étant monté mobile en rotation sur deux paliers d'extrémité solidaires du conduit dont un est exteme au réservoir et l'autre inteme, ledit élément de prélèvement (3), étant par sa tige, à la commande, entraîné en rotation par un ensemble moteur autour de l'axe géométrique central longitudinal de la tige (3a).

3. Dispositif de prélèvement de produits pulvérulents selon la revendication 1 ou la revendication 2, **caractérisé en ce que** l'élément d'obturation (7) est normal à l'axe géométrique de rotation de la tige (3a) et est déplaçable en translation le long de ce dernier entre la position de dégagement total et la position d'occlusion.

4. Dispositif de préièvement de produits pulvérulents selon la revendication 3, **caractérisé en ce que** l'élément d'obturation (7) est fixé en translation à la tige (3a) et que ladite tige (3a) est montée de manière mobile en translation selon l'axe géométrique de rotation dans les paliers de guidage en rotation

5. Dispositif de prélèvement de produits pulvérulents selon la revendication 4 **caractérisé en ce que** la tige (3a) de l'élément de prélèvement (3), au niveau de son palier exteme au réservoir (1), est prolongée au-delà de ce dernier pour recevoir un élément d'accouplement (13) à un ensemble moteur d'entraînement en rotation et en translation.

6. Dispositif de préièvement de produits pulvérulents selon l'une quelconque des revendications précédentes, **caractérisé en ce que** l'élément d'obturation (7) est constitué par un disque circulaire.

7. Dispositif de prélèvement de produits pulvérulents selon la revendication 6 **caractérisé en ce que** le disque (7) comporte, selon son périmètre, un rebord formant arête vive.

8. Dispositif de prélèvement de produits pulvérulents selon la revendication 6 ou la revendication 7 **caractérisé en ce que** le disque (7) comporte une série d'encoches régulièrement espacées et une série de dents régulièrement espacées chaque dent étant disposée entre deux encoches consécutives.

9. Dispositif de prélèvement de produits pulvérulents selon l'une quelconque des revendications précédentes, **caractérisé en ce que** l'orifice de chargement (4) est formé par une lumière pratiquée dans la paroi du conduit tubulaire (2) et tournée vers le haut du réservoir (1) de façon à permettre l'écoulement gravitaire du produit pulvérulent depuis le réservoir (1) vers le conduit (2) et donc vers l'élément de prélèvement et de transport (3) et que l'orifice de délivrance (5) est formé dans le conduit immédiatement en amont d'une ouverture d'évacuation (6) que comporte ce dernier, cette ouverture d'évacuation (6) étant orientée vers le bas de façon que le produit puisse s'écouler sous l'effet de la gravité vers un récipient de réception placé sous l'ouverture (6).

10. Dispositif de prélèvement de produits pulvérulents selon la revendication 9, **caractérisé en ce que** le palier externe au réservoir (1), de guidage de la tige (3ont) de l'élément de prélèvement et de transport (3) est monté dans le conduit (2) en aval de la lumière d'évacuation (6).

11. Dispositif de prélèvement de produits pulvérulents selon l'une quelconque des revendications précédentes, **caractérisé en ce qu'**il est équipé dans le réservoir (1) d'un dispositif de brassage et d'émottage du produit pulvérulent.

12. Dispositif de prélèvement de produits pulvérulents selon la revendication 11, **caractérisé en ce que** le dispositif de brassage et d'émottage est solidaire de l'élément de prélèvement et de transport (3).

13. Dispositif de prélèvement de produits pulvérulents selon la revendication 12, **caractérisé en ce que** la tige (3a) de l'élément de prélèvement et de transport (3), est prolongée au-delà de son palier interne au réservoir et que le dispositif de brassage et d'émottage est fixé à l'extrémité, interne au réservoir, de la tige (3a).

14. Dispositif de prélèvement de produits pulvérulents selon la revendication 13 **caractérisé en ce que** le dispositif de brassage et d'émottage est coaxial à l'élément de prélèvement et de transport (3) et entoure la partie interne au réservoir, du conduit tubulaire (2).

15. Dispositif de préièvement de produits pulvérulents selon la revendication 14 **caractérisé en ce que** le dispositit de brassage et d'émottage est constitué par un profilé (8) enroulé en spirale autour de la partie interne au réservoir du conduit tubulaire (2).

16. Dispositif de prélèvement de produits pulvérulents **caractérisé** selon l'une quelconque des revendications précédentes **caractérise en ce que** le réservoir (1) est entraîné en rotation par un ensemble moteur autour de l'axe géométrique longitudinal de la tige (3a) du dispositif de prélèvement et de transport

17. Dispositif de prélèvement de produits pulvérulents selon la revendication 16, **caractérisé en ce que** le réservoir (1) est monté en rotation autour du conduit (2), la paroi latérale correspondante (1a) du réservoir (1) étant traversée de part en part d'un alésage de guidage par lequel le réservoir est monté en rotation sur une portée (10) lisse cylindrique du conduit (2).

18. Dispositif de prélèvement de produits pulvérulents selon les revendications 11 et 17, **caractérisé en ce que** le dispositif de brassage et d'émottage est constitué par une première série de pales (11) fixée à la paroi du réservoir (1) et s'étendant de manière radiale vers l'axe de rotation de ce dernier et par une seconde série de pales (12) fixées au conduit (2) et s'étendant de manière radiale par rapport à ce dernier vers la paroi du réservoir (1), les pales (11) de la première série et les pales (12) de la seconde série étant décalées longitudinalement par rapport à l'axe de rotation du réservoir (1) de façon à s'interpénétrer au cours de la rotation.

19. Dispositif de prélèvement de produits pulvérulents selon la revendication 18, **caractérisé en ce que** l'extrémité interne au réservoir de la tige (3a) du dispositif (3) de prélèvement et de transport est calée en rotation sur l'autre paroi latérale (1b) du réservoir (1) de façon à transmettre au réservoir (1) son mouvement de rotation.

20. Dispositif de prélèvement de produits pulvérulents selon la revendication 19, **caractérisé en ce que** l'extrémité interne au réservoir de la tige (3a) du dispositif (3) de prélèvement et de transport est calée en translation sur la paroi latérale (1b) du réservoir (1) de façon à transmettre au réservoir (1) son mouvement de translation.

21. Dispositif de prélèvement de produits pulvérulents selon l'une quelconque des revendications précédentes, **caractérisé en ce que** le fond du réservoir (1) présente la forme d'une goulotte semi cylindrique selon l'axe géométrique de révolution de laquelle sont installées la partie interne au réservoir du conduit (2) et la partie interne au réservoir de l'élément de prélèvement et de transport (3).

22. Dispositif de prélèvement de produits pulvérulents selon l'une quelconque des revendications 1 à 20 **caractérisé en ce que** le réservoir (1) présente une forme cylindrique, la partie interne au réservoir du conduit (2) et du dispositif de prélèvement et de transport (3) étant installée selon l'axe longitudinal central du réservoir.

23. Installation de dosage automatique de produits pulvérulents **caractérisée en ce qu'**elle comporte au moins un dispositif selon l'une quelconque des revendications précédentes.

24. Installation de dosage automatique selon la revendications 23, **caractérisée en ce qu'**elle comporte plusieurs dispositifs agencés selon au moins une rangée rectiligne ou circulaire face à laquelle est déplacé un équipage mobile (15) motorisé portant l'ensemble moteur d'actionnement en rotation et en translation de la tige (3a) de l'élément de prélèvement et de transport (3), ainsi qu'une balance de pesée et un récipient de réception de produit pulvérulent installé sur la balance de pesée.

25. Installation de dosage automatique selon la revendications 24, **caractérisée en ce que** l'ensemble moteur est constitué par un moteur électrique (16) sur l'arbre de sortie rotatif duquel est fixée tant en translation qu'en rotation, une roue dentée ((14) destinée à être engrenée avec l'élément d'accouplement (13) constitué par un pignon denté.

26. Installation de dosage automatique selon la revendication 25, **caractérisée en ce que** l'ensemble moteur est pourvu d'une platine horizontale (17) montée en coulissement sur des glissières, normales ou radiales à la rangée de dispositifs, et d'un second moteur (18), pour déplacer la platine (17) le long de ses glissières et amener la roue dentée (14) au-dessus du pignon (13) ou bien la dégager de ce dernier.

27. Installation selon la revendication 26 **caractérisée en ce que** la roue (14) se développe sous la forme d'un secteur circulaire et présente un dégagement rectiligne par lequel elle est positionnée au dessus du pignon (13) par déplacement de la platine (17) avant d'être engrenée au pignon et que ladite roue (14) de part et d'autre de sa zone dentée est dotée de deux flancs latéraux sous forme de secteur circulaire, lesquels, par rotation de la roue viennent se disposer de part et d'autre du pignon (13).

28. installation selon la revendication 26, **caractérisée en ce que** l'équipage mobile (15) porte une mâchoire inférieure (19) mobilisée selon un mouvement ascendant d'engagement et un mouvement descendant de dégagement par un vérin (20), que la mâchoire (19) est terminée par une forme de fourche (21) qui vient en fin de course de mouvement ascendant se positionner en arrière du pignon denté (13) autour de la tige (3a) et que les glissières de la platine (17) sont montées sur un support approprié (22) monté sur des glissières verticales et mobilisé en translation verticale par un organe moteur (23).

## Claims

1. Device for extracting samples of powdered products in measured amounts, comprising a container (1) for storage of the powdered product to be delivered in measured amounts, a tubular conduit (2) penetrating the container (1), said tubular conduit (2) receiving in its interior a component (3) for extracting the powdered product from the container (1) and for conveying it from a loading orifice (4) which the conduit (21) has inside the container, toward a delivery orifice (5) for the powdered product, which the conduit (2) has outside the container (1), said delivery orifice (5) being associated with a blocking component (7), **characterised in that** said blocking component may be positioned and held on demand either in a position of total clearance of said orifice or in a position of occlusion of said orifice in which an annular gap remains between said orifice (5) and the contour of said blocking component (7), the width of the annular gap being approximately the same as the size of the grains forming the powdered product, the total clearance position allowing a maximum flow of powdered product and the occlusion position allowing a very light flow for achieving high precision in the delivered quantity of powdered product.

2. Device for extracting powdered products according to claim 1, **characterised in that** the extracting and conveying component consists of a rod (3a) disposed along the longitudinal central axis of the conduit (2) and of at least one thrust means (3b) fixed to the rod (3a) and forming a plurality of successive turns round the rod, said extracting and conveying component (3) being rotatably mounted by its rod (3a) on two end bearings integral with the conduit, one of which is external to the container and the other internal, said extracting component (3) being set into rotation on demand by its rod by a driving unit around the central geometric longitudinal axis of the rod (3a).

3. Device for extracting powdered products according to claim 1 or claim 2, **characterised in that** the blocking component (7) is normal to the geometric axis of rotation of the rod (3a) and may be displaced in translation along this axis between the total clearance position and the occlusion position.

4. Device for extracting powdered products according to claim 3, **characterised in that** the blocking component (7) is fixed in translation to the rod (3a) and that said rod (3a) is mounted movably in translation along the geometric axis of rotation in the bearings for guidance in rotation.

5. Device for extracting powdered products according to claim 4, **characterised in that** the rod (3a) of the extracting component (3) is lengthened in the region of its bearing external to the container (1) in order to receive a component (13) for coupling to a driving unit for setting into rotation and translation.

6. Device for extracting powdered products according to any of the preceding claims, **characterised in that** the blocking component (7) consists of a circular disc.

7. Device for extracting powdered products according to claim 6, **characterised in that** the disc (7) comprises a rim forming a sharp edge at its perimeter.

8. Device for extracting powdered products according to claim 6 or claim 7, **characterised in that** the disc (7) comprises a number of uniformly spaced notches and a number of uniformly spaced teeth, each tooth being disposed between two successive notches.

9. Device for extracting powdered products according to any of the preceding claims, **characterised in that** the loading orifice (4) is formed by an aperture made in the wall of the tubular conduit (2) and turned toward the top of the container (1) so as to allow the powdered product to flow by gravity from the container (1) toward the conduit (2) and therefore toward the extracting and conveying component (3) and **in that** the delivery orifice (5) is formed in the conduit immediately upstream of an outlet opening (6) thereof, this outlet opening (6) being oriented downwards so that the product can flow under the influence of gravity toward a receiver placed beneath the opening (6).

10. Device for extracting powdered products according to claim 9, **characterised in that** the bearing external to the container (1) for guidance of the rod (3a) of the extracting and conveying component (3) is mounted in the conduit (2) downstream of the outlet aperture (6).

11. Device for extracting powdered products according to any of the preceding claims, **characterised in that** it is provided in the container (1) of a device for stirring and breaking the powdered product.

12. Device for extracting powdered products according to claim 11, **characterised in that** the stirring and breaking device is integral with the extracting and conveying component (3).

13. Device for extracting powdered products according to claim 12, **characterised in that** the rod (3a) of the extracting and conveying component (3) is extended beyond its bearing inside the container and that the stirring and breaking device is fixed at the end of the rod (3a) inside the container.

14. Device for extracting powdered products according to claim 13, **characterised in that** the stirring and breaking device is coaxial to the extracting and conveying component (3) and surrounds the portion of the tubular conduit (2) inside the container.

15. Device for extracting powdered products according to claim 14, **characterised in that** the stirring and breaking device consists of a profile (8) wound in a spiral round the portion of the tubular conduit (2) inside the container.

16. Device for extracting powdered products according to any of the preceding claims, **characterised in that** the container (1) is set into rotation by a driving unit around the geometric longitudinal axis of the rod (3a) of the extracting and conveying device.

17. Device for extracting powdered products according to claim 16, **characterised in that** the container (1) is mounted rotatably around the conduit (2), the corresponding lateral wall (1a) of the container (1) being traversed right through by a guide bore by means of which the container is rotatably mounted on a plain cylindrical bearing (10) of the conduit (2).

18. Device for extracting powdered products according to claims 11 and 17, **characterised in that** the stirring and breaking device consists of a first row of blades (11) fixed to the wall of the container (1) and extending radially toward the axis of rotation thereof and of a second row of blades (12) fixed to the conduit (2) and extending radially thereto toward the wall of the container (1), the blades (11) of the first row and the blades (12) of the second row being offset longitudinally relative to the axis of rotation of the container (1) so as to penetrate one another during rotation.

19. Device for extracting powdered products according to claim 18, **characterised in that** the end of the rod (3a) of the extracting and conveying device (3) inside the container is rotationally engaged on the other lateral wall (1b) of container (1) so as to transmit its rotational movement to the container (1).

20. Device for extracting powdered products according to claim 19, **characterised in that** the end of the rod (3a) of the extracting and conveying device (3) inside the container is translationally engaged on the lateral wall (1b) of the container (1) so as to transmit is translational movement to the container (1).

21. Device for extracting powdered products according to any of the preceding claims, **characterised in that** the bottom of the container (1) has the form of a semi-cylindrical chute, along whose geometric axis of revolution there are installed the portion of the conduit (2) inside the container and the portion of the extracting and conveying component (3) inside the container.

22. Device for extracting powdered products according to any of claims 1 to 20, **characterised in that** the container (1) has a cylindrical shape, the portion of the conduit (2) and of the extracting and conveying device (3) inside the container being installed along the central longitudinal axis of the container.

23. Installation for automatic measuring of powdered products, **characterised in that** it comprises at least one device according to any of the preceding claims.

24. Installation for automatic measuring according to claim 23, **characterised in that** it comprises a plurality of devices arranged in at least one straight or circular row, opposite which there is displaced a motor-operated measuring unit (15) which carries the driving unit for setting the rod (3a) of the extracting and conveying component (3) into rotation and translation, as well as weighing balance and a receiver for powdered product installed on the weighing balance.

25. Installation for automatic measuring according to claim 24, **characterised in that** the driving unit consists of an electric motor (16) on whose rotating output shaft there is translationally and rotationally fixed a toothed wheel (14) intended to mesh with the coupling component (13) formed by a toothed pinion.

26. Installation for automatic measuring according to claim 25, **characterised in that** the driving unit is provided with a horizontal plate (17) mounted so as to slide on slideways which are normal or radial to the row of devices and with a second motor (18) for displacing the plate (17) along its slideways and bringing the toothed wheel (14) on top of the pinion (13) or releasing it therefrom.

27. Installation according to claim 26, **characterised in that** the wheel (14) is developed in the form of a sector of a circle and has a straight clearance through which it is positioned on top of the pinion (13) by displacement of the plate (17) before being meshed with the pinion and **in that** said wheel (14) is provided, on either side of its toothed region, with two lateral flanks in the form of a sector of a circle which dispose themselves on either side of the pinion (13) due to rotation of the wheel.

28. Installation according to claim 26, **characterised in that** the measuring unit (15) carries a lower jaw (19) which is caused to move with an ascending engagement movement and a descending disengagement movement by a jack (20), **in that** the jaw (19) is terminated with a form of fork (21) which positions itself behind the toothed pinion (13) around the rod (3a) at the end of the ascending course'of movement and **in that** the slideways of the plate (19) are mounted on a suitable support (22) mounted on vertical slideways and set into vertical translation by a driving means (23).

## Patentansprüche

1. Vorrichtung zur Entnahme von Pulverprodukten in dosierten Mengen mit einem Vorratsbehälter (1) des in dosierten Mengen abzugebenden Pulverprodukts, und einem in den Behälter (1) reichenden Leitungsrohr (2), das im Inneren ein Element (3) zur Entnahme des Pulverprodukts im Behälter (1) und zu seiner Förderung von einer Ladeöffnung (4), die das Leitungsrohr (21) im Behälter aufweist, zu einer Abgabeöffnung (5) des Pulverprodukts, welche das Leitungsrohr (2) außerhalb des Behälters (1) aufweist, wobei die Abgabeöffnung (5) mit einem Verschlußelement (7) zusammenwirkt, **dadurch gekennzeichnet, daß** das Verschlußelement gesteuert entweder in eine Stellung der völligen Freigabe der Öffnung oder in eine Verschlußstellung der Öffnung positioniert werden kann, in welcher zwischen der Öffnung (5) und dem Umriß des Verschlußelements (7) ein ringförmiger Spalt verbleibt, dessen Breite von gleicher Größenordnung wie die Größe der das Pulverprodukt bildenden Körner ist, wobei die Stellung der völligen Freigabe einen maximalen Durchsatz des Pulverprodukts und die Verschlußstellung einen sehr geringen Durchsatz mit einer großen Genauigkeit hinsichtlich der abgegebenen Menge des Pulverprodukts ermöglicht.

2. Vorrichtung zur Entnahme von Pulverprodukten nach Anspruch 1, **dadurch gekennzeichnet, daß** das Entnahme- und Förderelement aus einer Stange (3a), die gemäß der längsverlaufenden Mittelachse des Leitungsrohrs (2) angeordnet ist, und aus mindestens einem an der Stange (3a) befestigten Schubelement (3b) besteht, das um die Stange herum mehrere aufeinanderfolgende Spiralen bildet, wobei das Entnahme- und Förderelement (3) durch seine Stange (3a) in zwei Endlagern drehbar montiert ist, die fest mit dem Leitungsrohr verbunden sind und von denen eines außerhalb des Behälters und das andere innerhalb des Behälters liegt, wobei das Entnahmeelement (3) durch seine Stange gesteuert durch eine Antriebsanordnung um die längsverlaufende geometrische Mittelachse der Stange (3a) drehend angetrieben ist.

3. Vorrichtung zur Entnahme von Pulverprodukten nach Anspruch 1 oder 2, **dadurch gekennzeichnet, daß** das Verschlußelement (7) normal zur geometrischen Drehachse der Stange (3a) ist und längs derselben zwischen der Stellung der vollständigen Freigabe und der Verschlußstellung verschiebbar ist.

4. Vorrichtung zur Entnahme von Pulverprodukten nach Anspruch 3, **dadurch gekennzeichnet, daß** das Verschlußelement (7) an der Stange (3a) unverschiebbar befestigt ist und die Stange (3a) gemäß der geometrischen Drehachse in den Lagern, welche die Drehung führen, verschiebbar montiert ist.

5. Vorrichtung zur Entnahme von Pulverprodukten nach Anspruch 4, **dadurch gekennzeichnet, daß** die Stange (3a) des Entnahmeelements (3) auf der Höhe ihres außerhalb des Behälters (1) liegenden Lagers über dasselbe hinaus verlängert ist, um ein Kopplungselement (13) zur Kopplung mit einer Drehung und Verschiebung bewirkenden Antriebsanordnung aufzunehmen.

6. Vorrichtung zur Entnahme von Pulverprodukten nach einem der vorangehenden Ansprüche, **dadurch gekennzeichnet, daß** das Verschlußelement (7) aus einer kreisförmigen Scheibe besteht.

7. Vorrichtung zur Entnahme von Pulverprodukten nach Anspruch 6, **dadurch gekennzeichnet, daß** die Scheibe (7) an ihrem Umfang eine scharfe Kante aufweist.

8. Vorrichtung zur Entnahme von Pulverprodukten nach Anspruch 6 oder 7, **dadurch gekennzeichnet, daß** die Scheibe (7) eine Reihe von in regelmäßigen Abständen angeordneten Vertiefungen und eine Reihe von in regelmäßigen Abstände angeordneten Zähnen aufweist, wobei jeder Zahn zwischen zwei benachbarten Vertiefungen angeordnet ist.

9. Vorrichtung zur Entnahme von Pulverprodukten nach einem der vorangehenden Ansprüche, **dadurch gekennzeichnet, daß** die Ladeöffnung (4) von einer in der Wand des Leitungsrohrs (2) ausgebildeten und zum oberen Bereich des Vorratsbehälters (1) gerichteten Öffnung gebildet ist, welche das Ausfließen des Pulverprodukts vom Behälter (1) zum Leitungsrohr (2) und damit zum Entnahme- und Förderelement (3) unter Schwerkraft ermöglicht, und daß die Abgabeöffnung (5) im Leitungsrohr unmittelbar stromaufwärts von einer Austragsöffnung (6) gebildet ist, welche das Rohr aufweist, wobei diese Austragsöffnung (6) nach unten gerichtet ist, so daß das Produkt unter der Wirkung der Schwerkraft zu einem unter der Öffnung (6) angeordneten Aufnahmegefäß ausfließen kann.

10. Vorrichtung zur Entnahme von Pulverprodukten nach Anspruch 9, **dadurch gekennzeichnet, daß** das außerhalb des Behälters (1) liegende Lager zur Führung der Stange (3a) des Entnahme- und Förderelements (3) im Leitungsrohr (2) stromabwärts von der Abgabeöffnung (6) montiert ist.

11. Vorrichtung zur Entnahme von Pulverprodukten nach einem der vorangehenden Ansprüche, **dadurch gekennzeichnet, daß** sie im Vorratsbehälter (1) mit einer Vorrichtung zum Rühren und Zerkrümeln des Pulverprodukts ausgerüstet ist.

12. Vorrichtung zur Entnahme von Pulverprodukten nach Anspruch 11, **dadurch gekennzeichnet, daß** die Vorrichtung zum Rühren und Krümeln fest mit dem Entnahme- und Förderelement (3) verbunden ist.

13. Vorrichtung zur Entnahme von Pulverprodukten nach Anspruch 12, **dadurch gekennzeichnet, daß** die Stange (3a) des Entnahme- und Förderelements (3) über ihr im Inneren des Behälters befindliches Lager hinaus verlängert ist und die Rühr- und Krümelvorrichtung an dem im Behälter liegenden Ende der Stange (3a) befestigt ist.

14. Vorrichtung zur Entnahme von Pulverprodukten nach Anspruch 13, **dadurch gekennzeichnet, daß** die Rühr- und Krümelvorrichtung koaxial mit dem Entnahme- und Förderelement (3) ist und den im Behälter liegenden Teil des Leitungsrohrs (2) umgibt.

15. Vorrichtung zur Entnahme von Pulverprodukten nach Anspruch 14, **dadurch gekennzeichnet, daß** die Rühr- und Krümelvorrichtung aus einem Strangprofil (8) besteht, das spiralförmig um den im Behälter liegenden Teil des Leitungsrohrs (2) gewickelt ist.

16. Vorrichtung zur Entnahme von Pulverprodukten nach einem der vorangehenden Ansprüche, **dadurch gekennzeichnet, daß** der Vorratsbehälter (1) durch eine Antriebsanlage um die geometrische Längsachse der Stange (3a) der Entnahme- und Fördervorrichtung drehend angetrieben ist.

17. Vorrichtung zur Entnahme von Pulverprodukten nach Anspruch 16, **dadurch gekennzeichnet, daß** der Vorratsbehälter (1) um das Leitungsrohr (2) drehbar montiert ist, wobei die entsprechende Seitenwand (1a) des Behälters (1) beiderseits durch eine Führungsbohrung durchsetzt ist, durch welche der Behälter auf einer glatten zylindrischen Auflage (10) des Leitungsrohrs (2) drehbar montiert ist.

18. Vorrichtung zur Entnahme von Pulverprodukten nach den Ansprüchen 11 und 17, **dadurch gekennzeichnet, daß** die Rühr- und Krümelvorrichtung aus einer ersten Reihe von Schaufeln (11), die an der Wand des Behälters (1) befestigt sind und sich radial zu dessen Drehachse erstrecken, und aus einer zweiten Reihe von Schaufeln (12), die am Leitungsrohr (2) befestigt sind und sich radial zu diesem in Richtung auf die Wand des Behälters (1) erstrecken, besteht, wobei die Schaufeln (11) der ersten Gruppe und die Schaufeln (12) der zweiten Gruppe bezüglich der Drehachse des Behälters (1) längs versetzt sind, so daß sie sich im Verlauf der Drehung durchdringen.

19. Vorrichtung zur Entnahme von Pulverprodukten nach Anspruch 18, **dadurch gekennzeichnet, daß** das innerhalb des Behälters liegende Ende der Stange (3a) der Entnahme- und Fördervorrichtung (3) auf der anderen Seitenwand (1b) des Behälters (1) drehfest verkeilt ist, so daß es seine Drehbewegung auf den Behälter (1) überträgt.

20. Vorrichtung zur Entnahme von Pulverprodukten nach Anspruch 19, **dadurch gekennzeichnet, daß** das im Behälter liegende Ende der Stange (3a) der Entnahme- und Fördervorrichtung (3) unverschiebbar an der Seitenwand (1b) des Behälters (1) verkeilt ist, um dem Behälter (1) seine Verschiebungsbewegung zu vermitteln.

21. Vorrichtung zur Entnahme von Pulverprodukten nach einem der vorangehenden Ansprüche, **dadurch gekennzeichnet, daß** der Boden des Vorratsbehälters (1) die Form einer halbzylindrischen Rinne aufweist, in deren geometrischer Drehachse der innerhalb des Behälters liegende Teil des Leitungsrohrs (2) und der innerhalb des Behälters liegende Teil des Entnahme- und Förderelements (3) angeordnet sind.

22. Vorrichtung zur Entnahme von Pulverprodukten nach einem der Ansprüche 1 bis 20, **dadurch gekennzeichnet, daß** der Vorratsbehälter (1) eine zylindrische Form besitzt und der innerhalb des Behälters liegende Teil des Leitungsrohrs (2) und der Entnahmeund Fördervorrichtung (3) gemäß der längsverlaufenden Mittelachse des Behälters eingerichtet sind.

23. Anlage zur automatischen Dosierung von Pulverprodukten, **dadurch gekennzeichnet, daß** sie mindestens eine Vorrichtung nach einem der vorangehenden Ansprüche aufweist.

24. Anlage zur automatischen Dosierung nach Anspruch 23, **dadurch gekennzeichnet, daß** sie mehrere Vorrichtungen aufweist, die gemäß mindestens einer geraden und kreisförmigen Reihe angeordnet sind, der gegenüber ein bewegliches angetriebenes Gestell (15) verschoben wird, das die Antriebsanlage zur Drehung und Verschiebung der Stange (3a) des Entnahme- und Förderelements (3) sowie eine Waage und ein auf dieser angeordnetes Gefäß zur Aufnahme des Pulverprodukts trägt.

25. Anlage zur automatischen Dosierung nach Anspruch 24, **dadurch gekennzeichnet, daß** die Antriebsanlage aus einem Elektromotor (16) besteht, auf dessen Abtriebswelle sowohl unverschiebbar wie drehfest ein Zahnrad (14) befestigt ist, das zum Eingriff mit dem aus einem Ritzel bestehenden Kopplungselement (13) bestimmt ist.

26. Anlage zur automatischen Dosierung nach Anspruch 25, **dadurch gekennzeichnet, daß** die Antriebsanlage mit einer horizontalen Platine (17) versehen ist, die auf zu der Reihe von Vorrichtungen normalen oder radialen Gleitschienen verschiebbar montiert ist, und mit einem zweiten Motor (18) versehen ist, um die Platine (17) längs ihrer Gleitschienen zu verschieben und das Zahnrad (14) über das Ritzel (13) zu bringen oder es von letzterem freizusetzen.

27. Anlage nach Anspruch 26, **dadurch gekennzeichnet, daß** das Zahnrad (14) sich in Form eines Kreissektors entwickelt und einen geraden Rücksprung aufweist, durch den es durch Verschiebung der Platine (17) vor dem Eingriff mit dem Ritzel oberhalb des Ritzels (13) positioniert ist und daß das Zahnrad (14) beiderseits seines Zahnbereichs mit zwei Seitenflanken in Form von Kreissektoren versehen ist, die durch Drehung des Rades in eine Stellung beiderseits des Ritzels (13) gelangen.

28. Anlage nach Anspruch 26, **dadurch gekennzeichnet, daß** das bewegliche Gestell (15) eine untere Backe (19) trägt, die gemäß einer aufsteigenden Eingriffsbewegung und einer absteigenden Freigabebewegung durch einen Arbeitskolben (20) bewegbar ist, daß die Bakke (19) in einer Gabel (21) endet, welche sich am Ende der Aufstiegsbewegung in einer Lage hinter dem Ritzel (13) und die Stange (3a) umgebend befindet, und daß die Gleitschienen der Platine (17) an einem geeigneten Träger (22) montiert sind, der auf vertikalen Gleitschienen gehalten und durch ein Antriebselement (23) vertikal verschiebbar ist.
